# EUROPEAN PATENT APPLICATION

(11) **EP 2 863 088 A2**
(43) Date of publication of application: **22.04.2015**
(21) Application number: 14188299.3
(22) Date of filing: 09.10.2014
(51) Int. Cl.: F16F 15/06, F16F 1/02

(54) **Flexure**

(30) Priority: 18.10.2013 GB 201318455
(71) Applicant: Rolls-Royce plc, London SW1E 6AT (GB)
(72) Inventor: Mather, Andrew, Derby, Derbyshire DE24 8BJ (GB)
(74) Representative: Roberts, Nicholas John

(57) **Abstract**

A flexure element having a support frame (20), a first flexure linkage (22), a second flexure linkage (24), a first array of spring elements (26) and a second array of spring elements (28), wherein the first flexure linkage (22) is connected to the support frame (20) through the first array of spring elements (26), the second flexure linkage (24) is connected to the first flexure linkage (22) through the second array of spring elements (28), wherein the flexure element is in sheet form and the first array of spring elements (26) and the second array of spring elements (28) are substantially orthogonal to each other.

## Description

### Technical Field of Invention

The present invention relates to flexure devices that permit linear motion of an article in two dimensions. It finds particular application with flexure devices formed from sheet material.

### Background of Invention

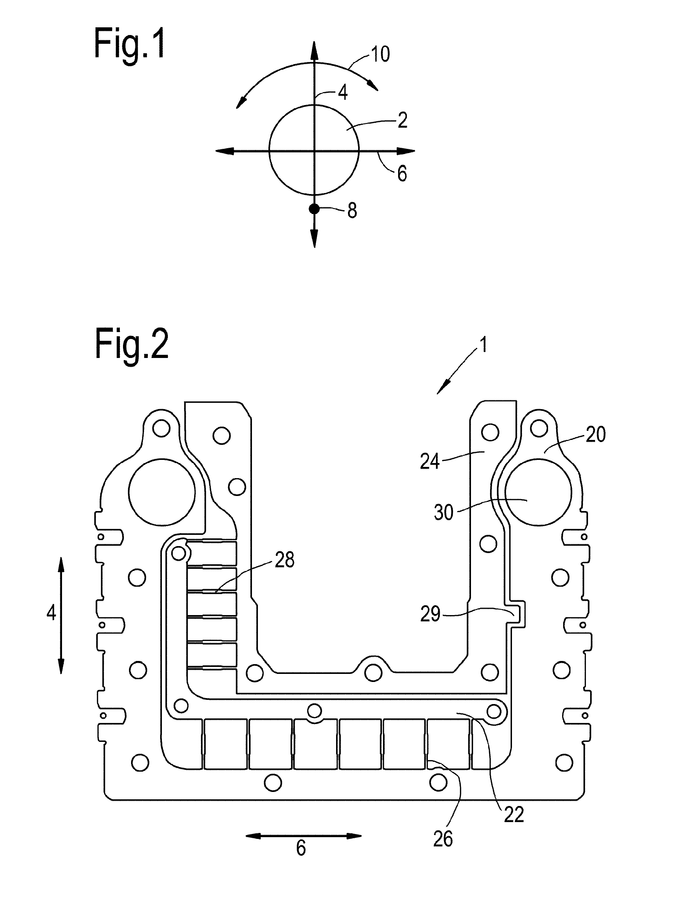

Mechanical articles often require an assembly which permits linear translation of the article without allowing rotation of the article pivoting. As depicted in Figure 1, the article 2 has to be secured in a manner which permits linear translation along first 4 and second 6 axes but avoids rotation translation 10 of the article about an axis 8 perpendicular to the two axes of linear movement.

It is desirable to provide a flexure device that is capable of providing translation along two orthogonal axes but is stiff against rotational translation. It is desirable that the flexure device is cheap and simple to manufacture with minimal assembly and high repeatability.

It is an object of the invention to seek to provide a flexure element that addresses these and other problems.

### Statements of Invention

According to the invention there is provided a flexure element having a support frame, a first flexure linkage, a second flexure linkage, a first array of spring elements and a second array of spring elements, wherein , the first flexure linkage is connected to the support frame through the first array of spring elements, the second flexure linkage is connected to the first flexure linkage through the second array of spring elements, wherein the flexure element is in sheet form and the first array of spring elements and the second array of spring elements are substantially orthogonal to each other.

Preferably the first flexure linkage comprises a first portion and a second portion extending at right angles to the first portion, wherein the first array of spring elements connect between the first portion and the frame and the second array of spring elements connect between the second portion and the second flexure linkage.

The first and second portions of the first flexure linkage form a "T" shape, or, more preferably, an "L" shape. The base of the T may provide the first portion of the first linkage.

Preferably each spring in the first or second array of spring elements has thinner ends where the spring element adjoins the support frame, first flexure linkage or second flexure linkage and a thicker middle between the ends.

Preferably each spring has a continuous curvature between the thicker middle portion and the thinner ends. Advantageously the springs provide an arrangement that is substantially frictionless with enough spring force to return the assembly to its nominal position.

Preferably the support is in the shape of a "U" and the first array of spring elements extend from the base of the "U" and the sides of the "U" provide translational stops for one or more of the first or second flexure elements.

The first array of spring elements and the second array of spring elements may be of different lengths.

The length of the spring elements in the first array of spring elements and the length of the spring elements in the second array of spring elements may be different.

The thickness of the spring elements in the first array of spring elements and the thickness of the spring elements in the second array of spring elements may be different.

The spacing of the spring elements in the first array of spring elements and the spacing of the spring elements in the second array of spring elements may be different.

Preferably the sheet material is titanium as this advantageously has a suitable flexibility. Other material may be steel, aluminium or plastic.

### Description of Drawings

Figure 1 depicts possible translational movement of an article in two-dimensions;
Figure 2 depicts a flexure element in accordance with the invention;
Figure 3 depicts an exemplary spring element used in the flexure element of Figure 2;
Figure 4 depicts an alternative embodiment of a flexure element;
Figure 5 depicts the use of a flexure element to present a strut to a cast ring.

### Detailed Description of Invention

Figure 2 depicts a flexure element in accordance with the invention. The flexure element comprises a support frame 20 that carries two flexure linkages 22, 24. The first flexure linkage is connected to the support frame by a first array of spring elements 26. The second flexure linkage is connected to the first flexure linkage by a second array of spring elements 28. An article (not shown) is mounted on the second flexure linkage.

The entire flexure element is formed from a sheet material by an appropriate manufacturing method e.g. chemical or mechanical etching, stamping, or cutting. In a preferred embodiment the sheet is titanium, between 1 to 4 mm thick and is cut with a laser. Advantageoulsy, this provides for accurate and repeatable features and a flexure element that is quick to produce as multiple flexure elements can be formed from a single sheet. In an alternative manufacturing method the flexure element could be formed by casting, or moulding. This may be of particular benefit where the material is plastic.

In the embodiment shown the support frame 20 is "U" shaped in that it has an elongate base and arms extending from each end of the base in the same direction. It will be appreciated that one or more of these arms may be obviated, or extend from the respective end of the base at angles different to the perpendicular as appropriate. In the embodiment shown the "U" shape offers an advantage in that it provides a limit stop for translation of the first and second flexure linkages along the axis 6 and with appropriate features 29 being formed therein could also provide limit stops for translation of the second flexure linkage along the axis 4.

The support frame is provided with features 30 that may be used to mount the flexure element into a wider machine, or manufacturing fixture.

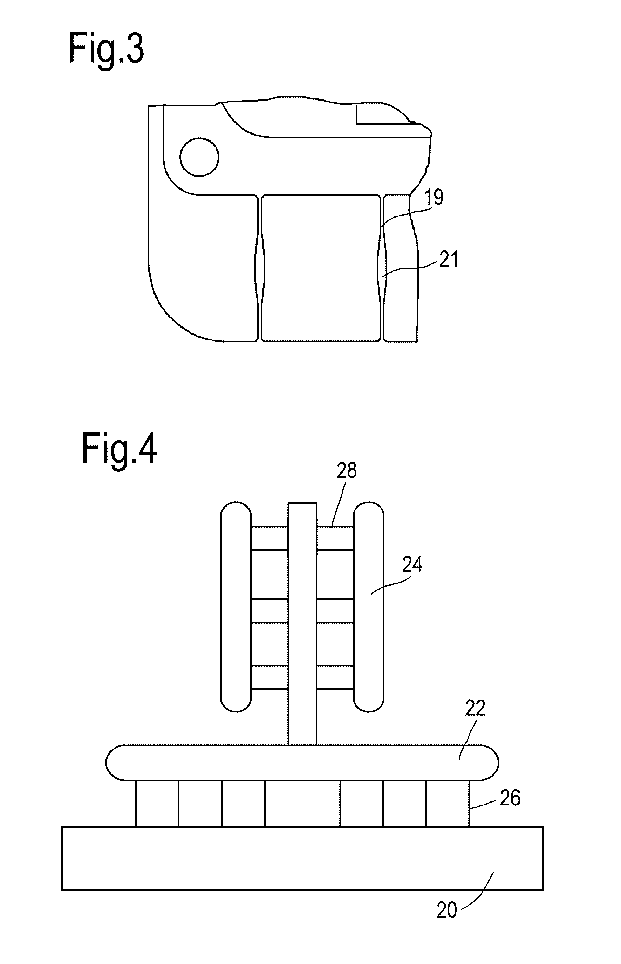

The first flexure linkage 22 has a first portion and a second portion extending at right angles therefrom. In the embodiment shown the second portion is cantilevered from one end of the first portion to provide an "L" shaped component. The second portion may cantilever from any position along the first portion and there may be an advantage in cantilevering it from a mid-point as will be described with reference to Figure 4.

Between the support 20 and the first flexure linkage a plurality of spring elements 26 are provided. These are preferably linear springs arranged at right angles to both the first portion of the flexure linkage and the axis of translation of direction 6. However, other, non-perpendicular, angles may also be used. The selected spacing, thickness and length of the springs are chosen to provide a suitable stiffness to the translation of the first flexure linkage in the direction of the axis 6.

The second flexure linkage 24 has a first portion and a second portion extending at right angles therefrom. Although the second portion is shown and is used to secure an article to the flexure element it is possible to mount the article directly to the first portion. In the embodiment shown the second portion has a "U" shape to provide a convenient mounting point for an article.

Between the second portion of the first flexure linkage 22 and the first portion of the second flexure linkage 24 a plurality of spring elements 28 are provided. These are preferably linear springs arranged at right angles to both the first portion of the flexure linkage and the axis of translation of direction 4 However, other, non-perpendicular, angles may also be used. The selected spacing, thickness and length of the springs are chosen to provide a suitable stiffness to the translation of the first flexure linkage in the direction of the axis 4.

It will be appreciated that the selected spacing, thickness and length of the springs between the support and the first flexure linkages and the selected spacing, thickness and length of the springs between the first flexure linkage and the second flexure linkage may be different to allow greater or less translation of the first flexure linkage in the direction of the axis 6 than translation of the second flexure linkage in the direction of axis 4. Figure 3 depicts in greater detail an exemplary spring of one of the spring element arrays. The spring has thinner portions 19 and thicker portion 21 which provide a good degree of flexibility whilst still being relatively stiff and robust and less likely to buckle in case of damage whilst being able to take more load. The profile also offers greater damping capability than a spring of uniform cross-section along its length thereby reducing vibration and oscillation. The spring section is thicker at the centre to concentrate the flex at the extremes of the spring.

Independently, each of the two spring arrays 26, 28 will describe an arc on translation, but in combination the springs allow linear translation with the second spring compensating for the non-linearity of the other.

Figure 4 depicts an alternative flexure element where the second portion of the first flexure linkage cantilevers from a mid-point of the first portion of the first flexure linkage. Advantageously, this allows for two second flexure linkages to connect to the first flexure linkage.

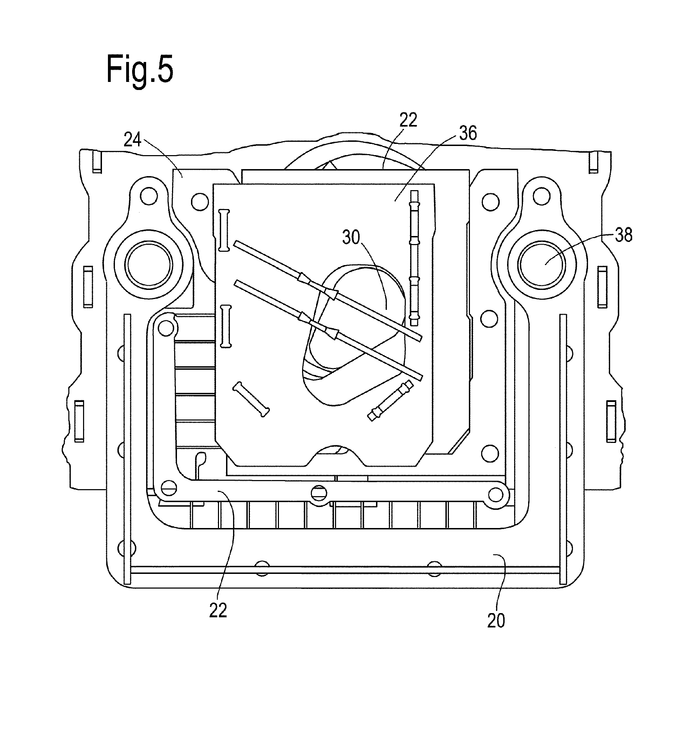

The flexure element finds application in a number of fields. In one field it is used to provide an alignment fixture between two components as they are joined. In Figure 5 a vane structure is strengthened through the introduction of a forged strut inserted through a cast ring. The ring is mounted into a fixture and the strut presented to the ring whilst it is supported by the flexure element. The strut can be moved along two axes to allow alignment of the strut to the ring without causing rotation.

The strut 30 is secured to the flexure through a box 36 having spaced upper and lower walls and side walls separating the upper and lower walls. The walls of the box are secured by "twist tabs", rivets or other appropriate fasteners. The flexure is secured to the fixture carrying the vane using the locating poles 38 on the fixture and apertures 30 on the flexure element frame. Once in place slight adjustment of the strut to the ring 32 can be made before the strut is inserted into the ring.

## Claims

1. A flexure element having a support frame (20), a first flexure linkage (22), a second flexure linkage (24), a first array of spring elements (26) and a second array of spring elements (28), wherein , the first flexure linkage is connected to the support frame through the first array of spring elements (26), the second flexure linkage is connected to the first flexure linkage through the second array of spring elements, wherein the flexure element is in sheet form and the first array of spring elements and the second array of spring elements are substantially orthogonal to each other.

2. A flexure element according to claim 1, wherein the first flexure linkage comprises a first portion and a second portion extending at right angles to the first portion, wherein the first array of spring elements connect between the first portion and the frame and the second array of spring elements connect between the second portion and the second flexure linkage.

3. A flexure element according to claim 2, wherein the first and second portions of the first flexure linkage form a "T" shape.

4. A flexure element according to claim 2, wherein the first and second portions of the first flexure linkage form an "L" shape.

5. A flexure element according to any preceding claim wherein each spring in the first or second array of spring elements has thinner ends where the spring element adjoins the support frame, first flexure linkage or second flexure linkage and a thicker middle between the ends.

6. A flexure element according to claim 5, wherein each spring has a continuous curvature between the thicker middle portion and the thinner ends.

7. A flexure element according to any preceding claim, wherein the support is in the shape of a "U" and the first array of spring elements extend from the base of the "U" and the sides of the "U" provide translational stops for one or more of the first or second flexure elements.

8. A flexure element according to any preceding claim, wherein the first array of spring elements and the second array of spring elements are of different lengths.

9. A flexure element according to any preceding claim, wherein the length of the spring elements in the first array of spring elements and the second array of spring elements are different.

10. A flexure element according to any preceding claim, wherein the thickness of the spring elements in the first array of spring elements and the second array of spring elements are different.

11. A flexure element according to any preceding claim, wherein the spacing of the spring elements in the first array of spring elements and the second array of spring elements are different.

12. A flexure element according to any preceding claim, wherein the sheet material is titanium.
